(19) Europäisches Patentamt

European Patent Office

Office européen des brevets

(11) Veröffentlichungsnummer : **0 360 898 B1**

(12) **EUROPÄISCHE PATENTSCHRIFT**

(45) Veröffentlichungstag der Patentschrift :
24.04.91 Patentblatt 91/17

�['] Int. Cl.⁵ : **H04Q 3/545, H04M 3/42**

(21) Anmeldenummer : 88116009.7

(22) Anmeldetag : 28.09.88

(54) **Verfahren zum Heranziehen von Anrufen, die von einer Kommunikationsanlage an ein oder mehrere Reihenanlagen-Kommunikationsendgeräte signalisiert werden.**

(43) Veröffentlichungstag der Anmeldung :
04.04.90 Patentblatt 90/14

(45) Bekanntmachung des Hinweises auf die
Patenterteilung :
24.04.91 Patentblatt 91/17

(84) Benannte Vertragsstaaten :
**AT CH DE FR GB LI**

(56) Entgegenhaltungen :
**WO-A-79/00250**

(56) Entgegenhaltungen :
**INTERNATIONAL CONFERENCE ON PRIVATE ELECTRONIC SWITCHING SYSTEMS, London, 10. - 12. April 1978, Seiten 70-75; T.M. QUINN: "Horizon communication system - An advanced technology system for small business customers"**
**SYSTEMS TECHNOLOGY, Nr. 28, April 1978, Seiten 7-13; J.C.H. DAVIS: "The K1 PABX"**

(73) Patentinhaber : **Siemens Aktiengesellschaft**
**Wittelsbacherplatz 2**
**W-8000 München 2 (DE)**

(72) Erfinder : **Muyssen, John, Dipl.-Ing.**
**Draaitopstraat 61**
**B-09050 Evergem (BE)**

## Beschreibung

In privaten Fernsprechnetzen sind an eine Nebenstellenanlage neben Einzelfernsprechern zusätzlich Fernsprech-Reihenanlagen angeschlossen. Diese vorzugsweise in Bürobereichen eingesetzten Fernsprech-Reihenanlagen sind überwiegend über zwei oder mehrere Fernsprech-Einzelanschlüsse mit der Fernsprech-Nebenstellenanlage verbunden. In Fernsprech-Reihenanlagen sind meist der erste der in Reihe geschalteten Fernsprechapparate als im Sinne eines Vermittlungsplatzes eingesetzte Hauptstelle und die weiteren Fernsprechapparate als Nebenstellen bestimmt. Jeder der Reihenanlagen-Fernsprechapparate weist Leitungstasten auf, mit deren Hilfe eine der zur Nebenstellenanlage führenden Anschlußleitungen belegt oder eine auf der jeweiligen Anschlußleitung ankommende Verbindung entgegengenommen wird. Eine ankommende Verbindung wird hierbei zuerst akustisch oder optisch in der Hauptstelle der Reihenanlage angezeigt. Des weiteren sind in den herkömmlichen Fernsprech-Reihenanlagen Internverbindungen möglich und Leistungsmerkmale – wie beispielsweise Weitergabe von ankommenden Verbindungen, Rückfrage, Nachtschaltung, usw. – realisiert. Durch den verstärkten Einsatz von Prozessortechnik werden in zunehmendem Maße Reihenanlagen-Funktionen weitgehend in die Nebenstellenanlagen integriert. So werden das vermittlungstechnische Belegen von Anschlußleitungen auf Tastenbetätigung, Internverbindungen und die Leistungsmerkmale von Reihenanlagen durch in der Nebenstellenanlage integrierte Programme durchgeführt. Der hierfür erforderliche Informationsaustausch zwischen der Nebenstellenanlage und den Fernsprechapparaten ist durch eine Teilnehmersignalisierungsprozedur in einem zwischen Nebenstellenanlage und Fernsprechapparaten angeordneten Signalisierungs-Duplexkanal realisiert. Durch die Verlagerung der Reihenanlagen-Funktionen in die Nebenstellenanlagen können Reihenanlagen-Netze konfiguriert werden, bei denen auf die Funktion einer Hauptstelle verzichtet und alle einer Reihenanlage zugeordneten Fernsprechapparate bzw. Kommunikationsendgeräte gleichberechtigt an die Nebenstellenanlage bzw. Kommunikationsanlage angeschlossen werden. Dies bedeutet, daß alle durch die Leitungstasten in den Kommunikationsendgeräten initiierten vermittlungstechnischen Prozeduren in der Kommunikationsanlage zu realisieren sind. Diese die Leitungstastenfunktionen darstellenden Funktionen für Reihenanlagen werden in der Fachwelt auch als Key-Leistungsmerkmale einer Kommunikationsanlage bezeichnet.

Wie bereits erläutert, wird eine an einer Reihenanlage ankommende Verbindung zuerst meist in der Hauptstelle akustisch oder optisch angezeigt. Hierbei wird in der Kommunikationsanlage für jede ankommende Verbindung eine zumindest eine Ziel- und Ursprungsadreßinformation enthaltende Tabelle angelegt. Mit deren Hilfe wird dem durch die Zieladreßinformation bestimmten Kommunikationsendgerät – Hauptstelle von Reihenanlagen – eine Rufanzeigeinformation übermittelt und dort angezeigt. Wird daraufhin der Kommunikationsanlage das Abheben des Hörers oder das Betätigen einer Leitungstaste in dem jeweiligen Kommunikationsendgerät signalisiert, so wird durch eine in der Kommunikationsanlage implementierte Verbindungsaufbauprozedur die ankommende Verbindung mit dem jeweiligen Kommunikationsendgerät verbunden. Wird eine ankommende Verbindung in der Hauptstelle nicht entgegengenommen, wird nach einer vorgegebenen Zeitspanne die ankommende Verbindung auf einem weiteren Kommunikationsendgerät oder allen einer Reihenanlage zugeordneten Kommunikationsendgeräten angezeigt. An diesen Kommunikationsendgeräten kann die ankommende Verbindung durch Betätigen einer Leitungstaste übernommen werden.

Des weiteren ist bekannt, in den Kommunikationsendgeräten Funktionstasten anzuordnen. Diese dienen im wesentlichen zum Initialisieren von Leistungsmerkmalen wie Rückruf, Anrufumleitung, Anrufübernahme usw. In zentralgesteuerten, digitalen Kommunikationsanlagen werden diese Leistungsmerkmale teils durch vorhandene, teils durch hinzugefügte vermittlungstechnische Prozeduren – durch entsprechende Programme – realisiert.

Aus den Druckschriften WO-A-7 9/00 250 und International Conference On Private Electronic Switching Systems, 10.-12. April 1978, Seiten 70-75 ; T.M. Quinn : "Horizon communication system - An advanced technology system for small business customers", ist für eine Nebenstellenanlage zusätzlich das Leistungsmerkmal Rufumlenkung – call coverage – bekannt. Bei dieser Rufumlenkung wird eine für ein Kommunikationsendgerät bestimmte ankommende Verbindung nicht nur an diesem sondern zusätzlich an einer zugehörigen Gruppe von Kommunikationsendgeräten angezeigt. Nach Betätigen einer leitungsbelegenden Funktionstaste in einem der Gruppe zugehörigen Kommunikationsendgeräte wird die ankommende Verbindung zum jeweiligen Kommunikationsendgerät vermittelt.

Die der Erfindung zugrundeliegende Aufgabe besteht darin, ein Verfahren zum Heranziehen einer an einem Key-Funktionen (Reihenanlagen-Funktionen) aufweisenden Key-Kommunikationsendgerät signalisierten, ankommenden Verbindungen, an ein anderes derselben Gruppe zugehörigen, der jeweiligen Reihenanlage zugeordneten Key-Kommunikationsendgerät mit möglichst geringem Programm- und Speicheraufwand in eine programmgesteuerte Kommunikationsanlage mit eingangs erläuterten Eigenschaften zu integrieren. Die Aufgabe wird ausgehend von den Merkmalen einer Kommunikationsanlage gemäß Oberbegriff durch die kennzeichnenden Merkmale des Anspruches 1 gelöst.

Der Kerngedanke der Erfindung ist in dem Einführen einer Gruppennummerninformation, die für die einer Reihenanlage zugeordnete Gruppe von Key-Kommunikationsendgeräten gleich ist, und in dem Mitbenutzen der für die ankommenden Verbindungen angelegten Tabellen zu sehen. Hierdurch wird der zusätzliche Programm- und Speicheraufwand für Reihenanlagenfunktionen, d. h. Key-Leistungsmerkmale, in einer Kommunikationsanlage minimiert.

Der wesentliche Vorteil der Erfindung ist darin zu sehen, daß mit diesem einfach zu realisierenden Verfahren eine schnelle und freie Zuordnung des jeweiligen Key-Kommunikationsendgerätes an eine oder auch mehrere jeweils Reihenanlagen zugeordneten Gruppen von Key-Kommunikationsendgeräten erreicht wird. Durch Andern, Hinzufügen oder Löschen von Gruppennummerninformationen kann das jeweilige Key-Kommunikationsendgerät beliebigen Gruppen von Key-Kommunikationsendgeräten zugeordnet werden. Ein weiterer Vorteil der Erfindung ist darin zu sehen, daß dieses Verfahren nicht nur auf eine Anwendung für Reihenanlagen bildende Gruppen von Key-Kommunikationsendgeräten beschränkt bleibt, sondern auch bei anderen Gruppen, wie beispielsweise "geschlossene Benutzergruppen" usw., eingesetzt werden kann.

Gemäß einer vorteilhaften Weiterbildung der Erfindung wird die ankommende Verbindung in der vorgegebenen, leitungsbelegenden Funktionstaste optisch angezeigt – siehe Anspruch 2. Diese optische Anzeige – z. B. durch eine Lumineszenzdiode realisiert – zeigt eine ankommende Verbindung an derjenigen Funktionstaste an, die für das Heranziehen von ankommenden Verbindungen zu betätigen ist.

Ein Key-Kommunikationsendgerät kann nicht nur einer, sondern mehreren Key-Funktionen aufweisenden Gruppen von Key-Kommunikationsendgeräten angehören. Um dem Key-Kommunikationsendgerät-Teilnehmer anzuzeigen, welche Verbindung für welche Gruppe ankommt, ist es besonders vorteilhaft, im Key-Kommunikationsendgerät für jede Gruppe eine separate leitungsbelegende Funktionstaste anzuordnen – siehe Anspruch 3.

Nach einer weiteren vorteilhaften Weiterbildung der Erfindung wird eine ankommende Verbindung nach einer zeitlichen Verzögerung den restlichen Kommunikationsendgeräten optisch und/oder akustisch angezeigt. Diese Variante ist dann vorteilhaft, wenn eine ankommende Verbindung durch die angegebene Zieladreßinformation für ein Kommunikationsendgerät, das einer Gruppe von Key-Kommunikationsendgeräten zugeordnet ist, bestimmt ist und dieses Key-Kommunikationsendgerät die ankommende Verbindung innerhalb einer vorgegebenen Zeitdauer bevorrechtigt entgegennehmen darf. Nach Ablauf dieser Zeitspanne wird die ankommende Verbindung an den restlichen, der Gruppe zugeordneten Key-Kommunikationsendgeräten angezeigt.

Durch eine weitere vorteilhafte Weiterbildung der Erfindung – siehe Anspruch 6 – kann einer leitungsbelegenden Funktionstaste eine Doppelfunktion zugeordnet werden. Zum einen wird sie bei freier Anschlußleitung im Sinne einer Leitungsbelegung oder Verbindungsherstellung benutzt und zum anderen zum bereits erläuterten Heranziehen von ankommenden Verbindungen eingesetzt. Der wesentliche Vorteil der Weiterbildung nach Anspruch 5 ist in der unveränderten Weiterverwendung der vorhandenen vermittlungstechnischen Prozeduren (Programme) zu sehen, da durch die in den zusätzlichen Speicherbereichen angegebenen Vermittlungsinformationen direkt in der jeweiligen Kommunikationsanlage vorhandene vermittlungstechnische Prozeduren – wie z. B. Belegen einer Anschlußleitung und Zusenden von Wahlaufforderungssignalen – angesteuert werden. Durch Einführung von leitungsbelegenden Funktionstasten und Zuordnen eines zusätzlichen, permanenten Speicherbereiches der Datenbasis der Kommunikationsanlage kann die Zuordnung der Key-Leistungsmerkmale zu den Funktionstasten durch einen einfach durchzuführenden Informationswechsel im zusätzlichen Speicherbereich verändert werden. Eine Änderung des Wechsels der Informationsinhalte im zusätzlichen Speicherbereich der Datenbasis der Kommunikationsanlage wird üblicherweise durch eine betriebstechnische Eingabe an der einer Kommunikationsanlage zugeordneten Bedieneinrichtung und durch in der Kommunikationsanlage implementierte Datenbasis-Zugriffsprozeduren bewirkt – siehe Anspruch 6. Ein Wechsel der Informationsinhalte kann auch durch eine betriebstechnische Eingabe am Key-Kommunikationsendgerät herbeigeführt werden – siehe Anspruch 7. Gegenüber einem Wechsel der Informationsinhalte durch eine betriebstechnische Eingabe am Key-Kommunikationsendgerät kann bei einem Wechsel der Informationsinhalte durch eine Bedienperson an der Bedieneinrichtung die Wahrscheinlichkeit einer Störung der in die Kommunikationsanlage eingebrachten vermittlungstechnischen Prozeduren aufgrund unsachgemäßer Eingabe verringert werden. Ein Wechsel der Informationsinhalte durch den Kommunikationsendgeräte-Teilnehmer bietet diesem jedoch die Möglichkeit, den leitungsbezogenen Funktionstasten im Kommunikationsendgerät die Key-Leistungsmerkmale frei zuzuordnen.

Die Erfindung wird im folgenden anhand eines in zwei Blockschaltbildern dargestellten Ausführungsbeispiels beschrieben. Dabei zeigen

Fig. 1 die Basisstruktur der Steuerung einer Kommunikationsanlage und

Fig. 2 die Struktur der dynamischen Daten für ankommende Verbindungen in der Datenbasis einer Kommunikationsanlage.

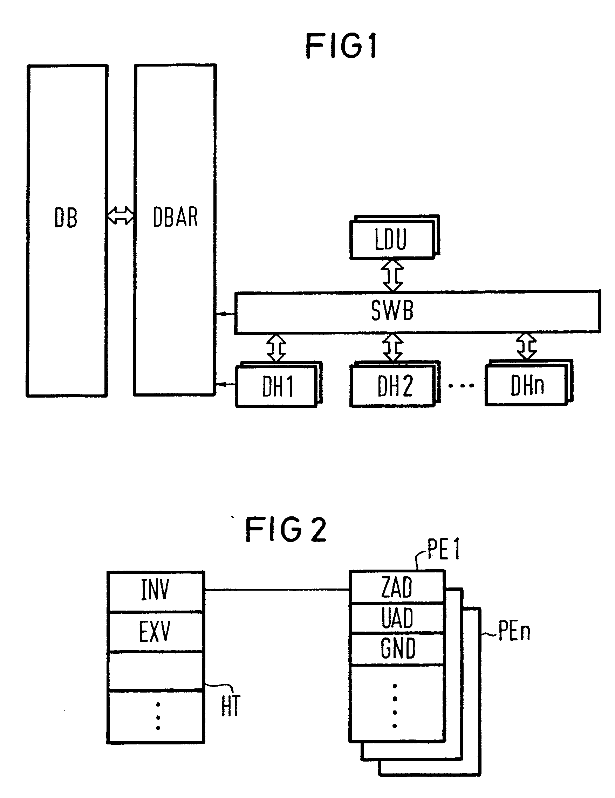

Die in Fig. 1 dargestellte Basissteuerstruktur einer digitalen Kommunikationsanlage weist zwei Steuerstrukturebenen auf, von denen die eine mittels jeweils an eine Kommunikationsendgeräteart angepaßten Leitungstechnik-Programmodulen DH1, DH2...DHn (Device Handler) der Steuerung peripherer Geräte dient, zu denen nicht nur an die Peripherie angeschlossene Kommunikationsendgeräte, sondern auch zentrale schaltungstechnische Einrichtungen, wie Anschaltsätze und Koppelfeld, zählen. Jedes dieser Leitungstechnik-Programmodule DH1, DH2...DHn bietet eine systemeinheitliche Schnittstelle zur Vermittlungstechnik-Strukturebene, die im vorliegenden Fall durch ein Vermittlungsprozedur-Programmodul LDU (Logical Device Unit) repräsentiert ist. Der Informationsaustausch zwischen der Leitungstechnik-Strukturebene und der Vermittlungstechnik-Strukturebene erfolgt mittels allgemeingültig definierter Meldungen, die über eine Software-Busstruktur SWB übertragen werden, die als integraler Bestandteil des Betriebssystems eines nicht dargestellten Kommunikationsrechners angesehen werden kann. Das Vermittlungsprozedur-Programmodul LDU, die Leitungstechnik-Programmodule DH1, DH2 ...DHn und der Softwarebus SWB haben mittels Datenbasis-Zugriffsroutinen DBAR Zugang zur Datenbasis DB der gesamten Kommunikationsanlage.

Die Leitungstechnik-Programmodule DH1, DH2...DHn sind kommunikationsendgeräteartenspezifisch so ausgebildet, daß sie jeweils das Signalisierungsverfahren und die Benutzeroberfläche der entsprechenden Kommunikationsendgeräteart steuern, während das Vermittlungsprozedur-Programmodul LDU kommunikationsendgeräteartenunabhängig und kommunikationsdiensteunabhängig derart strukturiert ist, daß es den maximalen Funktionsumfang der peripheren Geräte und Einrichtungen steuerungstechnisch beherrscht. Die Aufgaben des Vermittlungsprozedur-Programmoduls LDU umfassen also die für die Steuerung des Verbindungsaufbaus und -abbaus notwendigen Teilprozesse der gesamten Vermittlungsprozedur. So werden z. B. Berechtigungen geprüft, Wahlkontrollen durchgeführt, es erfolgt eine Signalisierung von vermittlungstechnischen Zuständen zwischen den Kommunikationsendgeräte, und es ist ein Aktivieren und Deaktivieren von Vermittlungstechnik-Leistungsmerkmalen aus den verschiedenen vermittlungstechnischen Zuständen heraus durchführbar.

Fig. 2 zeigt die Struktur der dynamischen Daten für ankommende Verbindungen in der Datenbasis einer Kommunikationsanlage. Dieser Speicherbereich in der Datenbasis DB kann beispielsweise ein Arbeitsspeicher eines in der Kommunikationsanlage angeordneten Vermittlungsrechners sein. Für die in diesem Speicherbereich abgelegten Daten gibt es jedoch keine gesicherte Versorgungsspannung und keine Restaurierung, d. h. diese Daten bleiben über einen durch einen Vermittlungsrechnungsfehler verursachten Wiederanlauf der Kommunikationsanlage hinaus nicht erhalten.

Die Basisstruktur der dynamischen Daten wird im wesentlichen durch Verbindungstabellen PE bestimmt. Vor diesen Verbindungstabelle PE ist eine Rahmentabelle HT angeordnet. Die in der Rahmentabelle HT gespeicherten dynamischen Daten dienen dem schnellen Zuordnen einer durch eine Funktionstaste gebildete Gruppennummerninformation zu den jeweiligen Verbindungstabellen PE und zur Steuerung der Abfrageprioritäten. In Abhängigkeit des Typs der ankommenden Verbindung wird in Teilbereiche der Rahmentabelle HT eine Information INV, EXV eingetragen, durch die diese ankommende Verbindung als beispielsweise eine externe oder interne ankommende Verbindung bestimmt ist. Weitere Eintragungen in dieser Rahmentabelle für eine weitere Unterscheidung ankommender Verbindungen sind beispielsweise – nicht in Fig. 2 dargestellt – Daten für Leistungsmerkmale, wie Rückruf, Anrufumleitung, usw. Jeder dieser Teilbereiche der Rahmentabelle HT ist einer jeweiligen Gruppe zugehörigen Verbindungstabelle PE zugeordnet. In Fig. 2 ist beispielhaft die Gruppe für Internverbindungen dargestellt. Jeder ankommenden Verbindung wird eine Verbindungstabelle PE zugeordnet, in die in Unterbereiche mit Hilfe der Datenbasis-Zugriffsprozeduren jeweils Zieladreßdaten ZAD – d. h. die Adreßinformation desjenigen Kommunikationsendgerätes, an die die ankommende Verbindung übermittelt werden soll – und die Ursprungsadreßinformationen UAD – d. h. die Adreßinformationen desjenigen Kommunikationsendgerätes, das die ankommende Verbindung initiierte -eingetragen ist. In einem weiteren Unterbereich werden die im Leitungstechnik-Programmodul DH1, DH2...DHn ermittelten Gruppennummerndaten GND eingetragen. In weiteren Unterbereichen können beispielsweise – nicht dargestellt – Adreßinformationen für Leistungsmerkmale, wie beispielsweise Rufumleitung, Rückfrage, usw., eingetragen werden.

Wie bereits erläutert, werden nach Betätigen einer vorgegebenen Funktionstasten, vorausgesetzt, in dem betreffenden Kommunikationsendgerät wird eine ankommende Verbindung angezeigt, mit Hilfe eines Leitungstechnik-Programmoduls DH1, DH2...DHn die dem jeweiligen Kommunikationsendgerät zugeordneten Gruppennummerndaten GND – können auch für mehrere Gruppen sein – ermittelt und mit den Gruppennummerndaten GND der ankommenden Verbindung verglichen. Bei Übereinstimmen der Gruppennummerndaten GND wird die ankommende Verbindung mit Hilfe der betroffenen Leitungstechnik-Programmodule DH1, DH2...DHn und dem Vermittlungstechnik-Programmodul LDU mit dem jeweiligen Kommunikationsendgerät verbunden.

## Ansprüche

1. Verfahren zum Heranziehen einer an einer Kommunikationsanlage ankommenden Verbindung, die entsprechend einer in dieser enthaltenen Zieladreßinformation für ein Kommunikationsendgerät bestimmt ist, an andere derselben Gruppe zugehörigen, Key-Funktionen (Reihenanlagen-Funktionen) aufweisende Kommunikationsendgeräte, an denen die ankommende Verbindung optisch und/oder akustisch angezeigt wird und nach Betätigen einer in den Kommunikationsendgeräten angeordneten leitungsbelegenden Funktionstasten die ankommende Verbindung zum jeweiligen Kommunikationsendgerät vermittelt wird, wobei in der Kommunikationsanlage für jede intern und extern ankommende Verbindung in zeitlicher Reihenfolge eine zumindest eine Ursprungs- und Zieladreßinformation enthaltende Tabelle angelegt wird, mit deren Hilfe dem durch die angegebene Zieladreßinformation bestimmten Kommunikationsendgerät die ankommende Verbindung durch Übermitteln einer Rufanzeigeinformation über eine zwischen dem Kommunikationsendgerät und der Kommunikationsanlage eingerichteten Signalisierungsduplexkanal angezeigt wird, und bei einer Signalisierung des Abhebens des Hörers oder Betätigen einer dem Kommunikationsendgerät zugeordneten Leitungstaste durch eine in der Kommunikationsanlage implementierte Verbindungsaufbauprozedur die ankommende Verbindung durchverbunden wird, **dadurch gekennzeichnet,** daß in der Tabelle zusätzlich zumindest eine jeweils einer Key-Kommunikationsendgerätegruppe zugeordnete Gruppennummerninformation angegeben ist, daß bei Betätigen einer der leitungsbelegenden Funktionstasten in einem der Gruppe zugehörigen Key-Kommunikationsendgeräte in diesem eine diese Funktionstaste bestimmende Tastenidentifikationsinformation gebildet und mit Hilfe der Verbindungsaufbauprozedur an die Kommunikationsanlage übermittelt wird, daß in der Kommunikationsanlage die diesem jeweiligen Key-Kommunikationsendgerät zugehörige Gruppennummerninformationen ermittelt und mit den Gruppennummerninformationen der aktuellen Tabellen verglichen wird, und daß bei Übereinstimmen der Gruppennummerninformationen die der entsprechenden Tabelle zugeordnete ankommende Verbindung mit Hilfe der Kommunikationsanlage zum jeweiligen Key-Kommunikationsendgerät vermittelt wird.

2. Verfahren nach Anspruch 1, **dadurch gekennzeichnet,** daß die ankommende Verbindung in der vorgegebenen leitungsbelegenden Funktionstaste optisch angezeigt wird.

3. Verfahren nach einem der vorhergehenden Ansprüche, **dadurch gekennzeichnet,** daß unterschiedliche Gruppen von Key-Funktionen aufweisenden Kommunikationsendgeräten unterschiedlichen leitungsbelegenden Funktionstasten der jeweils anderen Kommunikationsendgeräte zugeordnet sind.

4. Verfahren nach einem der vorhergehenden Ansprüche, **dadurch gekennzeichnet,** daß die ankommenden Verbindungen nach einer zeitlichen Verzögerung in den restlichen Kommunikationsendgeräten optisch und/oder akustisch angezeigt werden.

5. Verfahren nach einem der vorhergehenden Ansprüche, **dadurch gekennzeichnet,**
daß bei jedem Einleiten der Verbindungsaufbauprozedur ein jedem Kommunikationsendgerät in einer Datenbasis der Kommunikationsanlage zugeordneter Speicherbereich hinsichtlich logischer Funktionen wie Anschlußidentifikation, Dienste und Berechtigungen und hinsichtlich physikalischer Funktionen wie Kommunikationsendgeräteschnittstellen, Endgerätetyp und zusätzlicher Zeichen interpretationen im Sinne einer Kommunikationsendgeräteidentifikation und einer weiteren vermittlungstechnischen Behandlung gelesen und zumindest ein Teil der gelesenen Informationsinhalte in einem in der Kommunikationsanlage angeordneten Arbeitsspeicher gespeichert wird, daß jeder Funktionstaste in der Datenbasis ein jeweils eine Identifikationsinformation und eine vermittlungstechnische Prozeduren einzuleitende oder steuernde Vermittlungsinformation enthaltender, zusätzlicher Speicherbereich zugeordnet ist, daß im Falle nicht ankommender Verbindungen nach Betätigen einer Funktionstaste in einer der Kommunikationsendgeräte eine Tastenidentifikationsinformation gebildet und mit der eingeleiteten Verbindungsaufbauprozedur zur Kommunikationsanlage übermittelt wird, daß in der Kommunikationsanlage zusätzlich zum Lesen und Speichern der Informationsinhalte der Speicherbereiche die Identifikationsinformationen der zusätzlichen Speicherbereiche mit der Tastenidentifikationsinformation verglichen werden und daß bei Übereinstimmen die Vermittlungsinformationen des zugehörigen, zusätzlichen Speicherbereiches gelesen, im Arbeitsspeicher abgespeichert und anschließend die in der Vermittlungsinformation angegebenen Prozeduren eingeleitet werden.

6. Verfahren nach Anspruch 5, **dadurch gekennzeichnet,** daß ein Wechsel der Informationsinhalte der zusätzlichen Speicherbereiche durch eine betriebstechnische Eingabe an einer der Kommunikationsanlage zugeordneten Bedieneinrichtung und durch in der Kommunikationsanlage implementierbare Datenbasis-Zugriffsprozeduren bewirkt wird.

7. Verfahren nach einem der Ansprüche 5 oder 6, **dadurch gekennzeichnet,** daß ein Wechsel der Informationsinhalte der zusätzlichen Speicherbereiche durch eine betriebstechnische Eingabe am Kommunikationsendgerät und durch in der Kommunikationsanlage implementierte Datenbasis-Zugriffsprozeduren bewirkt wird.

## Claims

1. Method for taking at a communication system an incoming call which, in accordance with a destination address information item contained therein, is destined for one communication terminal at other communication terminals which belong to the same group and have key functions (key telephone system functions), at which communication terminals the incoming call is indicated optically and/or acoustically and, after pressing a lineseizing function key arranged in the communication terminals, the incoming call is switched to the respective communication terminal, a table containing at least one origin and destination address information item being created in the communication system for each internal and external incoming call in chronological order, with the aid of which the incoming call is indicated to the communication terminal specified by the stated destination address information item by transmission of a call indication information item over a duplex signalling channel set up between the communication terminal and the communication system, and the incoming call being connected through upon a signalling of the lifting of the receiver or pressing of a line key assigned to the communication terminal by a connection establishment procedure implemented in the communication system, characterised in that at least one group number information item assigned in each case to a key communication terminal group is additionally stated in the table, in that, when one of the line-seizing function keys is pressed in one of the key communication terminals belonging to the group, a key identification information item specifying this function key is formed therein and is transmitted with the aid of the connection establishment procedure to the communication system, in that the group number information associated with this respective key communication terminal is determined in the communication system and is compared with the group number information of the current tables, and in that when the group number information matches, the incoming call assigned to the corresponding table is switched to the respective key communication terminal with the aid of the communication system.

2. Method according to Claim 1, characterised in that the incoming call is optically indicated in the given line-seizing function key.

3. Method according to one of the preceding claims, characterised in that different line-seizing function keys of the respective other communication terminals are assigned to communication terminals having different groups of key functions.

4. Method according to one of the preceding claims, characterised in that the incoming calls are optically and/or acoustically indicated in the remaining communication terminals after a time delay.

5. Method according to one of the preceding claims, characterised in that, upon each initiation of the connection establishment procedure, a memory area assigned to each communication terminal in a data base of the communication system is read with respect to logic functions such as connection identification, services and authorisations and with respect to physical functions such as communication terminal interfaces, terminal type and additional signal interpretations in the manner of a communication terminal identification and further switching handling, and at least a part of the information contents read is stored in a working memory arranged in the communication system, in that each function key is assigned in the data base an additional memory area containing in each case an identification information item and a switching information item for initiating or controlling switching procedures, in that, in the case of non-incoming calls, after pressing a function key a key identification information item is formed in one of the communication terminals and is transmitted to the communication system with the initiated connection establishment procedure, in that, in addition to reading and storing the information contents of the memory areas, the identification information of the additional memory areas is compared with the key identification information item in the communication system, and in that, when they match, the switching information of the associated, additional memory area is read, stored in the working memory and subsequently the procedures stated in the switching information item are initiated.

6. Method according to Claim 5, characterised in that changing the information contents of the additional memory areas is effected by a technical operating input at an operating device associated with the communication system and by data base access procedures which can be implemented in the communication system.

7. Method according to one of Claims 5 or 6, characterised in that changing the information contents of the additional memory areas is effected by a technical operating input at the communication terminal and by data base access procedures implemented in the communication system.

## Revendications

1. Procédé pour envoyer une communication, qui arrive à une installation de communication et est destinée à un appareil de communication en fonction d'une information d'adresse de destination contenue dans cette communication, à d'autres appareils terminaux de communication, appartenant au même groupe et comportant des fonctions à touches (fonctions d'installations en série) et dans lesquelles la communication d'arrivée est indiquée optiquement et/ou acoustiquement et est retransmise, après l'actionnement d'une touche de fonction disposée dans les appareils terminaux de communication et occupant la ligne, à l'appareil terminal considéré de communication, et selon lequel dans l'installation de communication, pour chaque communication arrivant de façon interne et externe, un taleau est établi selon une séquence temporelle, tableau, qui contient au moins une information d'adresse d'origine et une information d'adresse de destination et à l'aide duquel la communication d'arrivée est indiquée à l'appareil terminal de communication déterminé par l'information indiquée d'adresse de destination, moyennant la retransmission d'une information d'indication d'appel par l'intermédiaire d'un canal duplex de signalisation disposé entre l'appareil terminal de communication et l'installation de communication, et selon lequel, lors d'une signalisation du raccrochement de l'écouteur ou de l'actionnement d'une touche de lige associée à l'appareil terminal de communication, la communication d'arrivée est transférée au moyen d'une procédure d'établissement de la communication, mise en oeuvre dans l'installation de communication, caractérisé par le fait qu'en outre au moins une information de numéro de groupe, associée respectivement à un groupe d'appareils terminaux de communication à touches est indiquée dans le tableau, que lors de l'actionnement de l'une des touches de fonctions, occupant la ligne, dans un appareil terminal de communication à touches appartenant au groupe, une information d'identification de touche, qui détermine cette touche de fonction, est formée dans cet appareil terminal et est retransmise, à l'aide de la procédure d'établissement de la communication, à l'installation de communication, que dans l'installation de communication, ces informations de numéro de groupe associées à cet appareil terminal respectif de communication à touches sont déterminées et comparées aux informations des numéros de groupe du tableau actuel, et qu'en cas de coïncidence des informations des numéros de groupe, la communication d'arrivée, associée au tableau correspondant, est commutée à l'aide de l'installation de communication en direction de l'appareil terminal respectif de communication à touches.

2. Procédé suivant la revendication 1, caractérisé par le fait que la communication d'arrivée est affichée optiquement dans la touche de fonction prédéterminée, qui occupe la ligne.

3. Procédé suivant l'une des revendications précédentes, caractérisé par le fait que différents groupes d'appareils terminaux de communication comportant des fonctions à touches sont associés à différentes touches de fonctions, occupant la ligne, des autres appareils terminaux respectifs de communication.

4. Procédé suivant l'une des revendications précédentes, caractérisé par le fait que les communications d'arrivée sont indiquées optiquement et/ou acoustiquement après un retard, dans les autres appareils terminaux de communication.

5. Procédé suivant l'une des revendications précédentes, caractérisé par le fait que lors de chaque déclenchement de la procédure d'établissement d'une communication, une zone de mémoire, associée à chaque appareil terminal de communication dans une base de données de l'installation de communication est lue en rapport avec des fonctions logiques comme par exemple l'identification de raccordements, des services et des autorisations et concernant des fonctions physiques, comme par exemple des interfaces de liaison à des appareils terminaux de communication, le type d'appareil terminal et des interprétations supplémentaires de signaux, dans le sens d'une identification d'appareils terminaux de communication et d'un traitement technique ultérieur de commutation, et qu'au moins une partie des contenus en informations lus est mémorisée dans une mémoire de travail disposée dans l'installation de communication, qu'à chaque touche de fonction est associée, dans la base de données, une zone de mémoire supplémentaire qui contient respectivement une information d'identification et une information de commutation devant déclencher ou commandant des procédures techniques de communication, que dans le cas de l'absence de communications arrivantes, après l'actionnement d'une touche de fonction dans les appareils terminaux de communication, une information d'identification de touche est formée et retransmise, conjointement avec la procédure déclenchée d'établissement de la communication, à l'installation de communication, que dans cette installation de communication, en plus de la lecture et de la mémorisation de contenus en informations des zones de mémoire, les informations d'identification des zones de mémoire supplémentaires sont comparées à l'information d'identification des touches et qu'en cas de coïncidence, les informations de commutation de la zone de mémoire associée supplémentaire sont lues et mémorisées dans la mémoire de travail et qu'ensuite, les procédures indiquées dans l'information de commutation sont déclenchées.

6. Procédé suivant la revendication 5, caractérisé par le fait d'un échange des contenus en information des zones de mémoire supplémentaires est déclenché par une introduction technique de service dans un dispositif de commande associé à l'installation de communication et au moyen de procédures d'accès à la base de données, pouvant être mises en oeuvre dans l'installation de communication.

7. Procédé suivant l'une des revendications 5 ou 6, caractérisé par le fait qu'un échange des contenus en informations des zones de mémoire supplémentaires est réalisé au moyen d'une introduction technique de service dans l'appareil terminal de communication et au moyen de procédures d'accès à la base de données, mises en oeuvre de l'installation de communication.

## FIG1

## FIG 2